(19) **Europäisches Patentamt European Patent Office Office européen des brevets**

(11) **EP 2 073 097 B1**

(12) **EUROPEAN PATENT SPECIFICATION**

(45) Date of publication and mention
of the grant of the patent:
**25.01.2017 Bulletin 2017/04**

(51) Int Cl.:
***G06F 1/32*** *(2006.01)*

(21) Application number: **08253932.1**

(22) Date of filing: **09.12.2008**

(54) **Transitioning a processor package to a low power state**

Überleiten eines Prozessorpakets in einen Niederleistungszustand

Transition d'un ensemble de processeur vers un état basse consommation

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.12.2007 US 1186**

(43) Date of publication of application:
**24.06.2009 Bulletin 2009/26**

(73) Proprietor: **Intel Corporation
Santa Clara, CA 95054 (US)**

(72) Inventors:
• **Song, Justin
Olympia, WA 98501 (US)**
• **Diao, Qian
Chao Yang District
Beijing, China 100020 (CN)**

(74) Representative: **Beresford, Keith Denis Lewis
Beresford Crump LLP
16 High Holborn
London WC1V 6BX (GB)**

(56) References cited:
EP-A- 1 282 030          US-A1- 2001 044 909
US-A1- 2004 064 752   US-A1- 2004 139 356
US-A1- 2005 022 038   US-A1- 2005 033 881
US-A1- 2007 156 992

• **BENINI L ET AL: "System-level dynamic power management" LOW-POWER DESIGN, 1999. PROCEEDINGS. IEEE ALESSANDRO VOLTA MEMORIAL WO RKSHOP ON COMO, ITALY 4-5 MARCH 1999, LOS ALAMITOS, CA, USA,IEEE COMPUT. SOC, US, 4 March 1999 (1999-03-04), pages 23-31, XP010323924 ISBN: 978-0-7695-0019-5**
• **JEJURIKAR R ET AL: "Leakage aware dynamic voltage scaling for real-time embedded systems" DESIGN AUTOMATION CONFERENCE, 2004. PROCEEDINGS. 41ST SAN DIEGO, CA, USA JUNE 7-11, 2004, PISCATAWAY, NJ, USA,IEEE, 7 June 2004 (2004-06-07), pages 275-280, XP010715660 ISBN: 978-1-5118-3828-3**
• **JEJURIKAR R ET AL: "Dynamic slack reclamation with procrastination scheduling in real-time embedded systems" DESIGN AUTOMATION CONFERENCE, 2005. PROCEEDINGS. 42ND ANAHEIM, CA, USA 13-17 JUNE 2005, PISCATAWAY, NJ, USA,IEEE, US, 13 June 2005 (2005-06-13), pages 111-116, XP010837187 ISBN: 978-1-59593-058-3**

EP 2 073 097 B1

**Description**

Background

Power and thermal management are becoming more challenging than ever before in all segments of computer-based systems. While in the server domain, the cost of electricity drives the need for low power systems, in mobile systems battery life and thermal limitations make these issues relevant. Optimizing a system for maximum performance at minimum power consumption is usually done using the operating system (OS) to control hardware elements. Most modem OS's use the Advanced Configuration and Power Interface (ACPI) standard, e.g., Rev. 3.0b, published October 10, 2006, for optimizing the system in these areas. An ACPI implementation allows a core to be in different power-saving states (also termed low power or idle states) generally referred to as so-called C1 to Cn states. Similar package C-states exist for package-level power savings.

When a core is active, it runs at a so-called C0 state, and when the core is idle, it may be placed in a core low power state, a so-called core non-zero C-state. The core C1 state represents the low power state that has the least power savings but can be switched on and off almost immediately, while an extended deep-low power state (e.g., C3) represents a power state where the static power consumption is negligible, but the time to enter into this state and respond to activity (i.e., back to C0) is quite long.

Package non-zero C-states enable power consumption at lower levels than the package active state (i.e., C0 state). Server workloads rarely drive all cores in same package busy, but even if only one core is active the whole package (including all idle cores) must stay in a high-power C0 state. Since package non-zero C-state entry/exit latency is relatively long (e.g., on the order of 100 to 200 microseconds ($\mu$s)), the transient time for all cores being idle usually is not worth using that state, or a performance loss will occur. Thus the OS is unable to take advantage of a package's lower power state benefits, resulting in a package always running at a higher power state than needed.

Examples of prior art systems are disclosed in US 2004/139356, EP-A-1 282 030 and in the publications "System-level dynamic power management", "Leakage aware dynamic voltage scaling for real-time embedded systems" and "Dynamic slack reclamation with procrastination scheduling in real-time embedded systems".

Brief Description of the Drawings

FIG. 1 is a block diagram of a portion of a system in accordance with one embodiment of the present invention.
FIG. 2 is a flow diagram of a method in accordance with one embodiment of the present invention.
FIG. 3 is a flow diagram of a prediction algorithm in accordance with one embodiment of the present invention.
FIG. 4 is a flow diagram of a rescheduling method in accordance with one embodiment of the present invention.
FIG. 5 is a timing diagram of scheduling tasks in accordance with an embodiment of the present invention.
FIG. 6 is a block diagram of a system in accordance with an embodiment of the present invention.

Detailed Description

Embodiments may reschedule/delay tasks so that the idle time of all cores of a package can be aligned and extended. In this way, more opportunities exist for using greater low power states, i.e., deeper non-zero package C-states. Embodiments may operate at relatively fine-granularity, e.g., every 500 microseconds ($\mu$s), so that latency sensitive workload performance is not degraded. In contrast, a conventional OS scheduler simply leaves all tasks' timing as they are set.

In various embodiments, a predetermined interval, e.g., 500$\mu$s, may be set and during each interval break-event processing may be delayed to make cores in the same package idle together and busy together. Further, the busy times can be stitched to be continuous (i.e., not separated by short idles) so that the idle duration can be extended to accommodate a package deep non-zero C-state's long entry/exit latencies. As described below, a prediction for future core utilization, i.e., for the next operation interval, may be generated. Then, real-time task rescheduling may be performed to enable greater power savings. Note that the C-states described herein are for an example processor such as an advanced Intel® Architecture 32 (IA-32) processor available from Intel Corporation, Santa Clara, CA, although embodiments can equally be used with other processors. Shown in Table 3 below is an example designation of package C-states available in one embodiment. However, understand that the scope of the present invention is not limited in this regard.

Using a conventional scheduling algorithm, for example a workload at a 15% system load level, the package is in the C0 state for 70% of the time (where the theoretical perfect case for power savings should be 15%). For the remaining 30% of time that the package could enter a non-zero package C-state, a large portion of the package idle time is for less than 500μs, which typically is not worth package C-state entry/exit transition energy cost to enter a deep package low power state. Assume the follow power consumption levels for an example processor in the package C0, C1, and C3 states:

Power(C0)=130Watts (W)
Power(C1)=28W
Power(C3)=18W

The power consumed in this example using a conventional scheduling policy, is:

$$\text{Power(C0)*70\%+Power(C1)*30\%*52\%+Power(C3)*30\%*48\%} = 97.96W \qquad \text{[EQ. 1]}$$

In contrast, embodiments may provide deeper low power states for longer time periods. For example, in comparison to the above calculation, a processor can be scheduled in accordance with an embodiment of the present invention such that it is the active state for only 20% of the time and a deeper low power state (e.g., package C3) for 80% of the time. In this case, the processor consumes:

$$\text{Power(C0)*20\%+Power(C3)*80\%} = 40.4W \qquad \text{[EQ. 2]}$$

leading to a theoretical upper limit of power saving of 57.56W (or 58.8%) using an embodiment of the present invention.

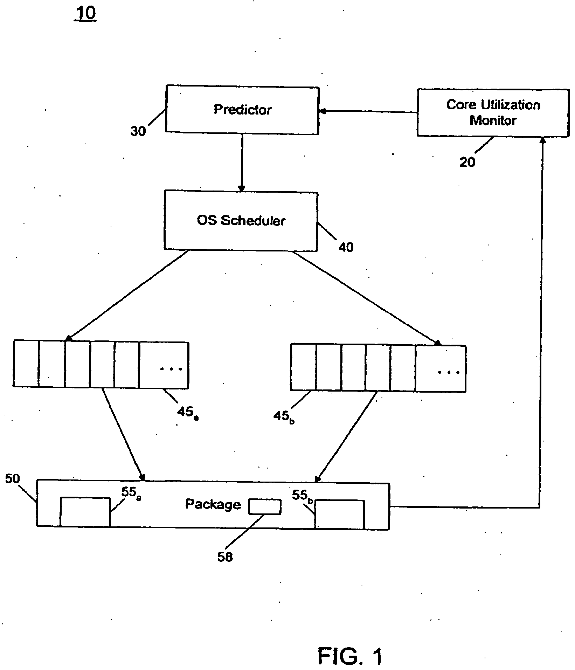

Referring now to FIG. 1, shown is a block diagram of a portion of a system in accordance with one embodiment of the present invention. As shown in FIG. 1, system 10 may be a computer system such as a desktop, server or laptop computer. System 10 may include at least one processor package 50 that includes multiple cores $55_a$ and $55_b$ (generically core 55) and a timer 58, which as will be described further below, acts as a watchdog timer. While shown with only two such cores in the embodiment of FIG. 1, understand the scope of the present invention is not limited in this regard and embodiments may be used in many-core systems. Furthermore, instead of a single package 50, many implementations may be adapted in a system such as a server system having multiple processor packages. As shown in FIG. 1, utilization information from cores 55 may be provided to a core utilization monitor 20. Monitor 20 may be a real-time monitor to capture all cores' central processing unit (CPU) utilization during the monitored interval (e.g., every 500μs). In one embodiment, the formula to compute utilization, U, is as follows:

$$U = \text{delta of unhalted core reference clockticks/delta of TimeStamp Counter} \quad \text{[EQ. 3]}$$

where the unhalted clock ticks are clock ticks occurring when the core is active and timestamp counter is a timestamp of total processor cycles during the monitored interval. The monitored data from monitor 20 may be provided to a predictor 30.

Predictor 30 may be used to predict future core utilization. In one embodiment, a Kalman filter algorithm prediction of computational complexity O(n) may be performed, where n is number of cores in the same package, such that the prediction can be done in real time. For each prediction interval (e.g., 500μs), predictor 30 may provide information to an OS scheduler 40 regarding its predictions of the core utilization, which may be on a utilization percentage basis.

In various embodiments, OS scheduler 40 may perform embodiments of the present invention to enable transitioning of the processor package to a lower power state. For example, using embodiments of the present invention, tasks, interrupts and break events to be scheduled on the various cores 55 may be delayed to enable a longer and more continuous idle period in which package 50 can be placed in a deeper low power state. Furthermore, package 50 may remain in this selected low power state for a longer time duration. At the conclusion of this extended idle period, which may be referred to herein as a delay period, the various cores of package 50 may be activated to perform any pending tasks, interrupts or other break events that may have been buffered during the delay period.

Thus based on the predicted core utilizations for the next interval, all incoming break events and tasks can be delayed for the duration of the delay period, referred to herein as a time T* (and which may vary in each operation interval). After that time, all break events and tasks will be serviced.

Since the OS' periodic timer interrupt is also delayed, on each core a watchdog timer 58 may be set with an initial value T*. Note that while in some embodiments, timer 58 may be present in each core 55, in other implementations only a single package timer may be present. When this timer expires, it will create a non-maskable interrupt and wake the corresponding core 55. Cores 55 may then service tasks and break events. In various embodiments buffers $45_a$ and $45_b$ may keep all interrupts received before the watchdog timer expires. Note while shown being coupled between OS scheduler 40 and package 50, such buffers may be associated with various system agents coupled to package 50, such as chipsets, input/output (I/O) devices, peripherals and so forth.

When all cores are idle after rescheduling of tasks, the low-power non-zero package C-state may be entered by processor hardware logic. While shown with this particular implementation in the embodiment of FIG. 1, the scope of the present invention is not limited in this regard. In some embodiments, monitor 20, predictor 30, and scheduler 40 all may be implemented using circuitry of package 50 such as a given core 55, executing software or firmware in accordance with an embodiment of the present invention. Further, OS scheduler 40 may be a given OS adapted to perform rescheduling of tasks within a utilization cycle from their original timing until after the delay period. However, other embodiments may be implemented in other locations such as a performance management unit (PMU) of a given platform.

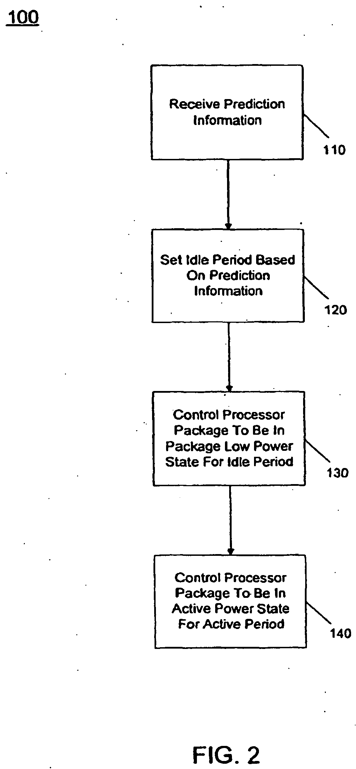

Referring now to FIG. 2, shown is a flow diagram of a method in accordance with one embodiment of the present invention. As shown in FIG. 2, method 100 may be used to determine an idle state for a processor package and control operation of the processor package to be in a low power state for this idle period.

Specifically, as shown in FIG. 2, method 100 may begin by receiving prediction information (block 110). As an example, the prediction information corresponds to utilization rates for each core of a package during a utilization period, which may be a relatively short time period (i.e., 500 μs).

Different predictions may be made in different embodiments. In one embodiment, a Kalman filter model (KFM) may be used to generate the predictions. A KFM models a partially observed stochastic process with linear dynamics and linear observations, both subject to Gaussian noise. It is an efficient recursive filter that estimates the state of a dynamic system from a series of incomplete and noisy measurements. Based on a KFM, the CPU package activity as set forth in a number of predetermined patterns associated with idle-busy states of the package's core (e.g., a percentage of a number of predetermined idle-busy patterns) are considered the observations of a real number stochastic process discretised in the time domain, denoted by $y_{1:t} = (y_1...y_t)$. The hidden state of the process, $x_{1:t} = (x_1..x_t)$, is also represented as a vector of real numbers. The linear stochastic different equation in KFM is:

$$x(t) = Ax(t-1) + w(t-1) \qquad p(w) \sim N(0,Q) \qquad x(0) \sim N(x_{1|0}, V_{1|0}) \qquad \text{[EQ. 4]}$$

And the measurement equation is:

$$y(t) = Cx(t) + V(t) \qquad p(v) \sim N(0,R) \qquad \text{[EQ. 5]}$$

The nxn transition matrix A in the difference Equation 4 relates the state at the previous t-1 time step to the state at the current step t, in the absence of either a driving function or process noise. Here n is the number of hidden states. In our task, m = n is the number of possible CPU activity states. $x_{1|0}$, $V_{1|0}$ are the initial mean and variance of the sate, Q is the system covariance for the transition dynamic noises, and R is the observation covariance for the observation noises. The transition of observation functions is the same for all time and the model is said to be time-invariant or homogeneous.

Using KFM, values can be predicted on the future time, given all the observations up to the present time. However, we are generally unsure about the future, and thus a best guess is computed, as well as a confidence level. Hence a probability distribution over the possible future observations is computed, denoted by $P(Y_{t+h} = y|y_{1:t})$, where k>0 is the horizon, i.e., how far into the future to predict.

Given the sequence of observed values $(y_1-y_t)$, to predict the new observation value is to compute $P(Y_{t+h} = y|y_{1:t})$ for some horizon k>0 into the future. Equation 6 is the computation of a prediction about the future observations by marginalizing out the prediction of the future hidden state.

$$P(Y_{t+h} = y \mid y_{1:t}) = \sum_x P(Y_{t+h} = y \mid X_{t+h} = x) P(X_{t+h} = x \mid y_{1:t}) \quad \text{[EQ. 6]}$$

In the right part of the Equation, we compute $P(X_{t+h} = x|y_{1:t})$ by the algorithm of the fixed-lag smoothing, i.e., $P(X_{t-L} = x|y_{1:t})$, L > 0, L is the lag. So before diving into the details of the algorithm, a fixed-lag smoothing in KFM is first introduced.

A fixed-lag Kalman smoother (FLKS) is an approach to perform retrospective data assimilation. It estimates the state of the past, given all the evidence up to the current time, i.e., $P(X_{t-L} = x|y_{1:t})$, $L > 0$, where L is the lag, e.g., we might want to figure out whether a pipe broke L minutes ago given the current sensor readings. This is traditionally called "fixed-lag smoothing", although the term "hindsight" might be more appropriate. In the offline case, this is called (fixed-interval) smoothing; this corresponds to computing $P(X_{T-L} = x|y_{1:T})$, $T \geq L \geq 1$.

In the prediction algorithm, there are $h$ more forward and backward passes. The computation of the passes is similar to that in the smoothing process. The only difference is that in the prediction step the initial value of the new observation is null, which means $y_{1:T+h} = [y_{1:T} \quad y_{null}^1 \cdots y_{null}^h]$. The prediction algorithm estimates the value of the $y_{1:T+h}$ = $[y_{1:T} \ y_{T+1} \cdots y_{T+h}]$ by performing retrospective data assimilation on all the evidence up to the current time plus the

$y_{1:T+h} = [y_{1:T} \quad y_{null}^1 \cdots y_{null}^h]$. In practice, we consider using the previous steps as the prior data, for example, if $h = 1$, then $y_{T+1} = (y_{T-1}+y_T)/2$ rather than $y_{T+1} = null$.

Table 1 shows the pseudo code of the prediction algorithm.

Table 1

```
function Predicting(y_{1:T}, x_{1|0}, V_{1|0}, A, C, Q, R)
x_{0|0} = x_{1|0}
V_{0|0} = V_{1|0}
y_{T+1} = (y_{T-1}+y_T)/2;


for t = 1:T+1
(x_{f|t}, V_{f|t}, L_t) = Fwd(y_f, x_{t-1|t-1}, V_{f-1|t-1}, A, C, Q, R)
end


for t = T:-1:1
(x_{f|T}, V_{f|T}, V_{f-1,f|T}) = Back(x_{t+1|T}, V_{t+1|T}, x_{t|t}, V_{t|t}, A, Q)
end
```

In Table 1, Fwd and Back are the abstract operators. For each Fwd (forwards pass) operation of the first loop (for $t$=1:T), we firstly compute the inference mean and variance by $x_{t|t-1} = Ax_{t-1|t-1}$ and $V_{t|t-1} = AV_{t-1|t-1}A' + Q$ ; then compute the error in the inference (the innovation), the variance of the error, the Kalman gain matrix, and the conditional log-likelihood of this observation by $err_t = y_t - Cx_{t|t-1}$, $S_t = CV_{t|t-1}C' + R$, $K_t = V_{t|t-1}C'S_t^{-1}$, and $L_t = \log(N(err_t; 0, S_t))$ respectively; finally we update the estimates of the mean and variance by $x_{t|t} = x_{t|t-1} + K_t err_t$ and $V_{t|t} = V_{t|t-1} - K_t S_t K_t'$.

For each Back (backwards pass) operation of the second loop (for $t$=T-1:-1:1), at first we compute the inference quantities by $x_{t+1|t} = Ax_{t|t}$ and $V_{t+1|t} = AV_{t|t}A' + Q$ ; then compute the smoother gain matrix by $J_t = V_{t|t}A'V_{t+1|t}^{-1}$ ; finally we compute the estimates of the mean, variance, and cross variance by $x_{t|T} = x_{t|t} + J_t(x_{t+1|T} - x_{t+1|t})$, $V_{t|T} = V_{t|t} + J_t(V_{t+1|T} - V_{t+1|t})J_t'$, and $V_{t-1,t|T} = J_{t-1}V_{t|T}$ respectively, which are known as the Rauch-Tung-Striebel (RTS) equations.

The computation as set forth in Table 1 can be complicated, e.g., there are matrix inversions in the T+1 step loop, when computing Kalman gain matrix in Fwd operator and the smoother gain matrix in Back operator. And the computational complexity will be $O(TN^3)$, where $T$ is the number of history observations; $N$ is the number of activity states, because for a general $N*N$ matrix, Gaussian elimination for solving the matrix inverse leads to $O(N^3)$ complexity. However, in various embodiments the algorithm implementation can be simplified.

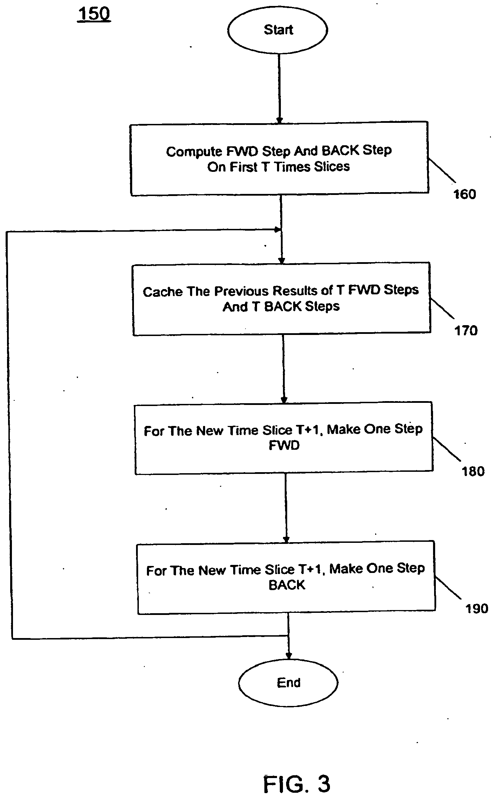

As shown in FIG. 3, which is a flow diagram of a prediction algorithm 150 in accordance with one embodiment of the present invention, the forward and back operations can be computed for a predicted number of intervals (e.g., time slices T=1000) (block 160). Then the previous $T$ step intermediate result of $x$ and $V$ can be cached (block 170), and just one step update of Fwd is made for the new coming time slice $T$+1 (block 180). Similarly, for the backwards pass, just one step Back operator for the $T$+1 time slice can be computed (block 190), using the cached previous T step intermediate results. Hence after the simplification, the computational complexity would be $O(N^3)$. Furthermore, the N=$2^{N'}$ ($N'$ is the number of cores inside the same package) processor package activity states can be classified into 3 patterns: all idle, all busy and partial idle, and we use these three patterns to describe the states, so $N$ would become only 3. On the other hand, we simplify the KFM and set $A, C, Q, R$ and initial $V$ as a diagonal matrix with the element values being 0 or 1, to reduce the operation complexity of the algorithm to O(N). While described using this prediction algorithm, embodiments of the present invention are not limited in this regard.

Referring back to FIG. 2, based on this prediction information, an idle period may be set (block 120). Note that blocks 110 and 120 may be implemented in various locations in different embodiments. In one particular embodiment, these blocks may be implemented in an OS, such as within an OS scheduler, although the scope of the present invention is not limited in this regard.

Referring still to FIG. 2, next the processor package may be controlled to be in a package low power state for the idle period (block 130). As will be discussed further below, this low power state may be a deeper low power state than otherwise may be possible. This is so, as the idle period can be a continuous period from the beginning of a next utilization cycle until an active period, which corresponds to the difference between the next utilization cycle length and the idle period length. This control of the processor package may be implemented by receiving OS commands to place the processor package into the selected low power state. However, in other implementations the processor package itself may determine an appropriate low power state based on the duration of the idle period and all its cores' deepest C-state.

At the conclusion of the idle period, the active period is initiated and thus the processor package may be controlled to be in a package active power state (block 140), such as the package C0 state, although the scope of the present invention is not limited in this regard. While shown with this particular implementation in the embodiment of FIG. 2, the scope of the present invention is not limited in this regard.

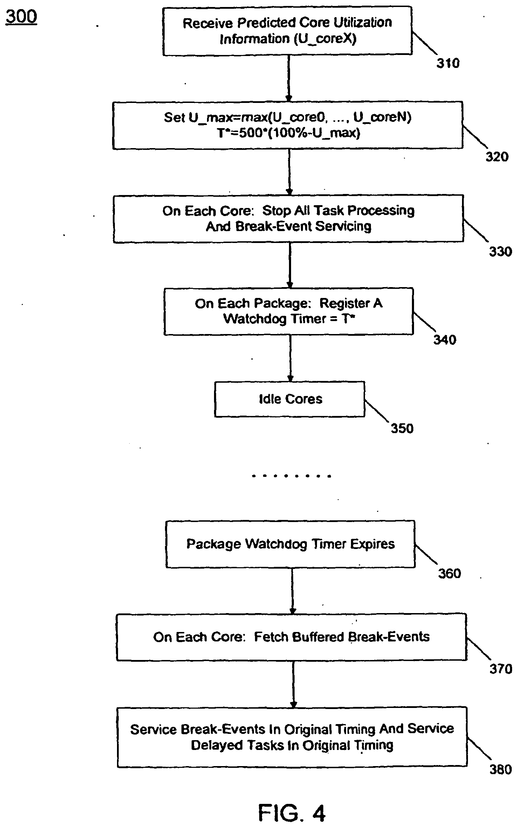

Referring now to FIG. 4, shown is a flow diagram of a rescheduling method in accordance with one embodiment of the present invention. As shown in FIG. 4, method 300 may be implemented by an OS scheduler to receive utilization prediction information and reschedule activities on a package to enable a delay period to be realized such that the package can enter into a low power state, and in many implementations a deep low power state, for the duration of the delay period.

As shown in FIG. 4, method 300 may begin by receiving predicted core utilization information (block 310). More specifically, in various embodiments a predictor, such as predictor 30 of FIG. 1 may provide, for each core of a package, a predicted core utilization to the OS scheduler. In some embodiments, this prediction may be a core utilization value, $U\_coreX$, for each core of the package. In one such embodiment, this utilization value may correspond to a percentage, indicating a predicted percentage of time for a next operation interval in which the core is predicted to be in an active state. However the scope of the present invention is not limited in this regard. For example, in other implementations the percentage information may be a pattern distribution for predicted core states for the next interval. Such pattern distribution may vary widely, depending on a number of low power states supported, as well as a given number of cores, length of the prediction period and so forth. As one example, a pattern distribution can include three different idle-active patterns, although more or fewer such patterns may be provided, e.g., with varying granularities as to a number of cores at a given activity level.

Next, the core with the highest predicted utilization rate may be identified and a maximum utilization rate, $U\_max$, may be set equal to this predicted value (block 320). Furthermore, a delay period, $T^*$, may be set based on this predicted maximum utilization rate. For example, for a next operation interval (NOI), $T^*$ may be set equal to NOI x (100%-$U\_max$), where $U\_max$ is expressed as a percentage.

Referring still to FIG. 4, at the beginning of the next interval (i.e., at the beginning of a next $500\mu s$ cycle), all task processing and break-event servicing may be stopped on each core (block 330). Furthermore, on each package, a watchdog timer may be registered to a time equal to the delay period, $T^*$ (block 340). Then the cores of the package may be idled (block 350). Thus at this time, the package may be placed into a package low power state, such as a package C1 state, although given that the delay period is for an extended and deterministic time, the package can be placed into a deeper low power state, such as the package C3 state, although the scope of the present invention is not limited in this regard. For example, in other implementations based on the core utilization information, if the delay period is set to be longer than a given threshold (e.g., 20% of the $500\mu s$ interval), a deeper package low power state such as a package C6 or C7 state may be entered. Accordingly, for the time of the delay period, the package may remain in this low power state, thus enabling configurable and deeper power savings.

This low power state may thus remain in effect until the package watchdog timer expires (block 360). At this time, the package may transition from its low power state to the active C0 state. Then on each core, any break events that have been buffered may be fetched (block 370). For example, during the delay period in which the package is in an idle state, one or more devices coupled to the package may have buffered break events destined to the package. Thus, upon waking of the individual cores, these break events may be fetched. Accordingly, at block 380, the break events may be serviced in their original timing. That is, the buffered break events may be serviced in the order in which they were buffered (e.g., on a first in first out basis). After servicing of any break events, any tasks scheduled for the core may then be performed according to their original timing. That is, after handling the break events any tasks scheduled to each core may be processed in the order of their original scheduling. While shown with this particular implementation in the embodiment of FIG. 4, the scope of the present invention is not limited in this regard and other manners of delaying processing of tasks and break events on a package may be realized to enable relatively long, continuous idle periods in which the package can be placed in a package low power state.

In contrast to embodiments such as described above, using a conventional OS scheduler, tasks and break events are serviced immediately, causing cores and the package to frequently to enter and exit idle states. Since periods of minimal idles do not permit use of long-latency and low-power deep package C-states, only the package C1 state can be used. Also conventional OS scheduler cores' busy times are not overlapped, causing a package to remain in C0 while only a single core is busy. Assume using conventional scheduling that of a 500μs period, the total time spent in the package C0 state is 125μs, and total time in the package C1 state is 375μs. Instead, using an embodiment of the present invention predicting a first core's utilization of 10% and a second core's utilization of 15%, then the maximum core's utilization (U_max) is 15%. Accordingly, the determined delay period T* may be set as follows:

$$T^* = \text{interval time} \times (100\% - U\_max) \, [EQ \, 7]$$

where U_max is expressed as a percentage (i.e., 15% is expressed as 15). In this case, T*=500*(100% - 15%) = 425μs, and the package in the coming 500μs will get 425μs of continuous idle time, which can enable a deeper low power state such as the package C3 state. Thereafter the 425μs watchdog timer expires, the package returns to the C0 state and each core will process all tasks and break events in their original timing. Example processor power specifications and power consumption using a conventional scheduling and in accordance with one embodiment of the present invention, for an example 15% system load level are shown in Table 2.

Table 2

| Processor power consumption | Power(C0)=130W Power(C1)=28W Power(C3)=18W |
|---|---|
| Conventional OS scheduling | Power(C0)*70%+Power(C1)*30%*52%+Power(C3)*30%*48% = 97.96W |
| Scheduling using embodiment of present invention | Power(C0)*20%+Power(C3)*80% = 40.4W |
| Difference (or theoretical upper limit of power saving) | 57.56W (or 58.8%) |

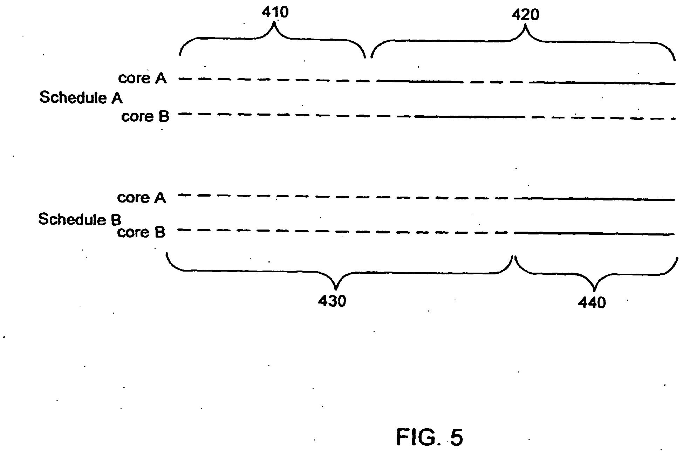

Referring now to FIG. 5, shown is a timing diagram of scheduling tasks to multiple cores of a package according to a conventional OS scheduling algorithm and according to an embodiment of the present invention. As shown in FIG. 5, assume a first core A and a second core B are present in a processor package. Schedule A corresponds to a conventional scheduling. At an initial time duration 410 of an activity interval, which may correspond to 500μs, both cores may be in an idle state (represented by a dashed line) and thus the package may be placed into the package C1 state. That is, although both cores are idle, because tasks are scheduled onto both cores in the near future, the latency needed to enter into a greater low power state exceeds its benefit. Thus, the package is placed only into the package C1 state. Then shown beginning at time 420, the package is transitioned to the active C0 state, as from that time forward at least one of the two cores is busy (the active state is represented by the solid lines) executing tasks or other operations.

In contrast, with reference to schedule B, scheduled in accordance with an embodiment of the present invention, a delay period corresponding to time duration 430 is provided at a beginning of the operation interval. Because of the extended duration of this delay period 430, which may be 425μs, the package may be placed in a deeper low power state, e.g., a package C3 state (or even deeper C-state), thus enabling greatly enhanced power savings, on the order of approximately 60% more than that of schedule A. At the conclusion of this delay period 430, the package is placed into the active state and thus for the remaining duration of the operation interval, the package is in the package C0 state for time duration 440. While not shown in FIG. 5, understand that individual cores may enter into core low power states (e.g., core C-states) during this active period. For example, all cores may be in the active state at a beginning of the active period, and as tasks and break events are completed, individual cores can be placed into a core low power state. Thus in this particular example, where a 15% load level exists, no performance impact occurs, while achieving 60% greater power savings than a conventional scheduling. Embodiments thus enable improved processor power consumption and no performance impact.

For purposes of example, Table 3 below shows package C-states and their descriptions, along with the estimated power consumption in these states, with reference to an example processor having a thermal design power (TDP) of 130 watts (W). Of course it is to be understood that this is an example only, and embodiments are not limited in this regard.

Table 3

|  | Description | Estimated power consumption |
|---|---|---|
| Package (Pkg) C0 | All uncore and core logics active | 130W |
| Pkg C1 | All cores inactive, package (pkg) clockgated | 28W |
| Pkg C3 | Pkg C1 state + all external links to long-latency idle states + put memory in short-latency inactive state | 18W |
| Pkg C6 | Pkg C3 state + reduced voltage for powerplane (only very low retention voltage remains) + put memory in long-latency inactive state | 10W |
| Pkg C7 | Pkg C6 state + last level cache (LLC) shrunk | 5W |

While described herein as OS-based scheduling, embodiments are not limited in this regard. That is, in other implementations, software, firmware or hardware may be adapted on a package basis or at another location within a system, such as a power management unit (PMU) to enable dynamic rescheduling of tasks within an operating interval such that extended, continuous idle periods within each operating interval may be realized, enhancing the ability to enter into extended and deeper low power states on a package basis. Furthermore, while shown in FIG. 5 as providing the delay period at the beginning of an operation interval, the scope of the present invention is not limited in this regard and in other implementations, processing may be performed up front, followed by the delay period.

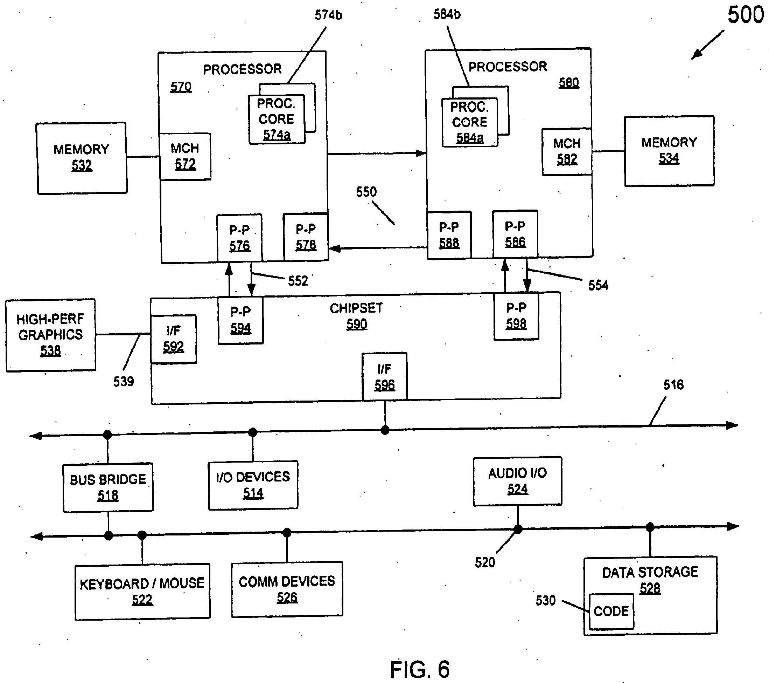

Embodiments may be implemented in many different system types. Referring now to FIG. 6, shown is a block diagram of a system in accordance with an embodiment of the present invention. As shown in FIG. 6, multiprocessor system 500 is a point-to-point interconnect system, and includes a first processor 570 and a second processor 580 coupled via a point-to-point interconnect 550. As shown in FIG. 6, each of processors 570 and 580 may be multicore processors, including first and second processor cores (i.e., processor cores 574a and 574b and processor cores 584a and 584b), although additional cores may be present in the processors. Each processor 570 and 580 may be controlled to be in a lower package C* state as a delay period T* can be determined and set. Each processor may further include hardware, software, firmware or combinations thereof to enable monitoring of utilization, and generating and using prediction information to enable determination of a delay period for a next operation interval in accordance with an embodiment of the present invention.

Still referring to FIG. 6, first processor 570 further includes a memory controller hub (MCH) 572 and point-to-point (P-P) interfaces 576 and 578. Similarly, second processor 580 includes a MCH 582 and P-P interfaces 586 and 588. As shown in FIG. 2, MCH's 572 and 582 couple the processors to respective memories, namely a memory 532 and a memory 534, which may be portions of main memory (e.g., a dynamic random access memory (DRAM)) locally attached to the respective processors. First processor 570 and second processor 580 may be coupled to a chipset 590 via P-P interconnects 552 and 554, respectively. As shown in FIG. 6, chipset 590 includes P-P interfaces 594 and 598.

Furthermore, chipset 590 includes an interface 592 to couple chipset 590 with a high performance graphics engine 538, by a P-P interconnect 539. In turn, chipset 590 may be coupled to a first bus 516 via an interface 596. As shown in FIG. 6, various I/O devices 514 may be coupled to first bus 516, along with a bus bridge 518 which couples first bus 516 to a second bus 520. Various devices may be coupled to second bus 520 including, for example, a keyboard/mouse 522, communication devices 526 and a data storage unit 528 such as a disk drive or other mass storage device which may include code 530, in one embodiment. Further, an audio I/O 524 may be coupled to second bus 520.

Embodiments may be implemented in code and may be stored on a storage medium having stored thereon instructions which can be used to program a system to perform the instructions. The storage medium may include, but is not limited to, any type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present invention has been described with respect to a limited number of embodiments, those skilled in the art will appreciate numerous modifications and variations therefrom, as defined in the appended claims.

**Claims**

1. A method comprising:

   receiving prediction information corresponding to a predicted utilization value for each of a plurality of cores of a processor package during a next operation interval, the next operation interval corresponding to a utilization cycle for the processor package;

   setting a delay period for the processor package during the next operation interval in which the processor package is to be in a package low power state, in which the plurality of cores are inactive, based on the prediction information; and

   causing the processor package to enter into the package low power state for the delay period and thereafter causing the processor package to enter into a package active state for an active period of the next operation interval, a length of the active period corresponding to a difference between a length of the next operation interval and a length of the delay period, the length of the active period corresponding to a duration sufficient to execute tasks and break events scheduled to a core of the plurality of cores having a greatest predicted utilization value for the next operational interval, the delay period extending from a beginning of the next operation interval to a beginning of the active period, including rescheduling all break events and tasks to be executed on the plurality of cores from the delay period to the active period.

2. The method of claim 1, further comprising initializing a timer of the processor package to the length of the delay period, and initiating the active period when the timer times out.

3. The method of claim 2, further comprising receiving the prediction information and setting the delay period in an operating system 'OS' and transmitting a value of the delay period from the OS to the processor package to initialize the timer.

4. The method of claim 1, wherein the delay period corresponds to NOI x (100% - Umax), where NOI corresponds to the next operation interval, and Umax is the greatest predicted utilization value.

5. The method of claim 4, further comprising:

   fetching the break events from a buffer external to the processor package after the beginning of the active period; and

   servicing the break events and thereafter servicing the tasks, wherein the break events and the tasks are serviced according to an original scheduling delayed by the delay period.

6. A system comprising:

   a processor package including a plurality of cores and at least one timer, wherein the processor package is to remain in a package low power state in which the plurality of cores are inactive for a first portion of an operation interval and in a package active state for a second portion of the operation interval corresponding to a utilization cycle, wherein all break events and tasks scheduled for the plurality of cores during the first portion are rescheduled to the second portion;

   a memory coupled to the processor package;

   a monitor coupled to the processor package to receive utilization information for the plurality of cores for a current interval;

   a predictor coupled to the monitor to predict a predicted utilization rate for each of the plurality of cores for the operation interval based on the utilization information; and

   a scheduler coupled to the predictor to receive the utilization rates and to determine a length of the first portion of the operation interval based on at least one of the utilization rates, wherein the processor package is to enter into the package active state during the second portion of the operation interval, wherein the second portion corresponds to a duration sufficient to execute tasks and break events scheduled to a core of the plurality of cores having a greatest predicted utilization rate, for the next operational interval.

7. The system of claim 6, wherein the first period corresponds to:

   OI x (100% - Umax), where OI corresponds to the operation interval, and Umax is the greatest predicted utilization rate.

8. The system of claim 6, wherein the scheduler is to reschedule an original timing for a plurality of tasks from within the first portion to within the second portion, wherein the processor package is to execute the plurality of tasks in the second portion according to the original timing.

9. A storage medium storing instructions that when executed by a multicore processor package:

receive prediction information corresponding to a predicted utilization value for each of a plurality of cores of the multicore processor package during a next operational interval;
determine, based on the prediction information, a delay period corresponding to a difference between a length of the next operation interval, the next operation interval corresponding to a utilization cycle for the multicore processor package, and a length of an inactive period sufficient to service operations in the next operation interval scheduled to a core of the multicore processor package having a highest predicted utilization rate for the next operation interval;
control entry of the multicore processor package into a package low power state in which the plurality of cores of the multicore processor package are inactive at a beginning of the next operation interval, including rescheduling all break events and tasks to be executed on the plurality of cores from the delay period to the active period and exit of the multicore processor package from the package low power state to a package active state at a conclusion of the delay period; and
fetch break events from a buffer external to the multicore processor package after the delay period and service the break events and thereafter service tasks scheduled to the multicore processor package, wherein the break events and the tasks are serviced according to an original scheduling rescheduled from the delay period to the active period.

10. The storage medium of claim 9, further storing instructions to determine the delay period in an operating system 'OS' and transmit a value of the delay period from the OS to the multicore processor package to initialize a timer of the multicore processor package.

11. The storage medium of claim 9, wherein the delay period corresponds to NOI x (100% - Umax), where NOI corresponds to the next operation interval, and Umax is the highest predicted utilization rate.

**Patentansprüche**

1. Verfahren, umfassend:

Empfangen von Vorhersageinformationen, die einem vorhergesagten Auslastungswert für jeden mehrerer Kerne einer Prozessoransammlung während eines nächsten Operationsintervalls entsprechen, wobei das nächste Operationsintervall einem Auslastungszyklus für die Prozessoransammlung entspricht;
Setzen eines Verzögerungszeitraums für die Prozessoransammlung während des nächsten Operationsintervalls, in dem sich die Prozessoransammlung in einem Low-Power-Zustand der Ansammlung befinden soll, in dem die mehreren Kerne inaktiv sind, auf der Basis der Vorhersageinformationen; und
Bewirken, dass die Prozessoransammlung für den Verzögerungszeitraum in den Low-Power-Zustand der Ansammlung eintritt, und danach Bewirken, dass die Prozessoransammlung für einen aktiven Zeitraum des nächsten Operationsintervalls in einen Aktivzustand der Ansammlung eintritt, wobei eine Länge des aktiven Zeitraums einer Differenz zwischen einer Länge des nächsten Operationsintervalls und einer Länge des Verzögerungszeitraums entspricht, wobei die Länge des aktiven Zeitraums einer Dauer entspricht, die ausreicht, um Tasks und Unterbrechungsereignisse auszuführen, die für einen Kern der mehreren Kerne mit einem größten vorhergesagten Auslastungswert für das nächste Operationsintervall eingeteilt sind, und sich der Verzögerungszeitraum von einem Anfang des nächsten Operationsintervalls zu einem Anfang des aktiven Zeitraums erstreckt, einschließlich Neueinteilung aller Unterbrechungsereignisse und Tasks, die auf den mehreren Kernen auszuführen sind, von dem Verzögerungszeitraum in den aktiven Zeitraum.

2. Verfahren nach Anspruch 1, ferner umfassend:

Initialisieren eines Timers der Prozessoransammlung auf die Länge des Verzögerungszeitraums und Einleiten des aktiven Zeitraums, wenn der Timer ausläuft.

3. Verfahren nach Anspruch 2, ferner umfassend:

Empfangen der Vorhersageinformationen und Setzen des Verzögerungszeitraums in einem Betriebssystem 'OS' und Übertragen eines Werts des Verzögerungszeitraums von dem OS zu der Prozessoransammlung, um den Timer zu initialisieren.

4. Verfahren nach Anspruch 1, wobei der Verzögerungszeitraum NOI x (100% Umax) entspricht, wobei NOI dem nächsten Operationsintervall entspricht und Umax der größte vorhergesagte Auslastungswert ist.

5. Verfahren nach Anspruch 4, ferner umfassend:

Abrufen der Unterbrechungsereignisse von einem Puffer außerhalb der Prozessoransammlung nach dem Anfang des aktiven Zeitraums; und
Bedienen der Unterbrechungsereignisse und danach Bedienen der Tasks, wobei die Unterbrechungsereignisse und die Tasks gemäß einer ursprünglichen Einteilung, verzögert um den Verzögerungszeitraum, bedient werden.

6. System, umfassend:

eine Prozessoransammlung mit mehreren Kernen und mindestens einem Timer, wobei die Prozessoransammlung für einen ersten Teil eines Operationsintervalls in einem Low-Power-Zustand der Ansammlung, in dem die mehreren Kerne inaktiv sind, und für einen zweiten Teil des Operationsintervalls, der einem Auslastungszyklus entspricht, in einem Aktivzustand der Ansammlung verbleiben soll, wobei alle für die mehreren Kerne während des ersten Teils eingeteilten Unterbrechungsereignisse und Tasks neu auf den zweiten Teil eingeteilt werden;
einen mit der Prozessoransammlung gekoppelten Speicher;
eine mit der Prozessoransammlung gekoppelte Überwachungsvorrichtung zum Empfangen von Auslastungsinformationen für die mehreren Kerne für ein aktuelles Intervall;
einen mit der Überwachungsvorrichtung gekoppelten Prädiktor zum Vorhersagen einer vorhergesagten Auslastungsrate für jeden der mehreren Kerne für das Operationsintervall auf der Basis der Auslastungsinformationen; und
einen mit dem Prädiktor gekoppelten Scheduler zum Empfangen der Auslastungsraten und zum Bestimmen einer Länge des ersten Teils des Operationsintervalls auf der Basis mindestens einer der Auslastungsraten, wobei die Prozessoransammlung während des zweiten Teils des Operationsintervalls in den Aktivzustand der Ansammlung eintreten soll, wobei der zweite Teil einer Dauer entspricht, die ausreicht, um Tasks und Unterbrechungsereignisse auszuführen, die für einen Kern der mehreren Kerne mit einer größten vorhergesagten Auslastungsrate für das nächste Operationsintervall eingeteilt sind.

7. System nach Anspruch 6, wobei der erste Zeitraum dem Folgenden entspricht:

OI x (100% Umax), wobei OI dem Operationsintervall entspricht und Umax die größte vorhergesagte Auslastungsrate ist.

8. System nach Anspruch 6, wobei der Scheduler ein ursprüngliches Timing für mehrere Tasks neu von innerhalb des ersten Teils auf innerhalb des zweiten Teils einteilen soll, wobei die Prozessoransammlung die mehreren Tasks in dem zweiten Teil gemäß dem ursprünglichen Timing ausführen soll.

9. Speichermedium, das Anweisungen speichert, die, wenn sie durch eine Mehrkern-Prozessoransammlung ausgeführt werden,
Vorhersageinformationen empfangen, die einem vorhergesagten Auslastungswert für jeden mehrerer Kerne der Mehrkern-Prozessoransammlung während eines nächsten Operationsintervalls entsprechen;
auf der Basis der Vorhersageinformationen einen Verzögerungszeitraum bestimmen, der einer Differenz zwischen einer Länge des nächsten Operationsintervalls, wobei das nächste Operationsintervall einem Auslastungszyklus für die Mehrkern-Prozessoransammlung entspricht, und einer Länge eines inaktiven Zeitraums, der ausreicht, um Operationen in dem nächsten Operationsintervall zu bedienen, die für einen Kern der Mehrkern-Prozessoransammlung mit einer höchsten vorhergesagten Auslastungsrate für das nächste Operationsintervall eingeteilt sind, entspricht;
an einem Anfang des nächsten Operationsintervalls den Eintritt der Mehrkern-Prozessoransammlung in einen Low-Power-Zustand der Ansammlung, in dem die mehreren Kerne der Mehrkern-Prozessoransammlung inaktiv sind, einschließlich Neueinteilung aller Unterbrechungsereignisse und Tasks, die auf den mehreren Kernen auszuführen sind, von dem Verzögerungszeitraum in den aktiven Zeitraum, und an einem Ende des Verzögerungszeitraums Austritt der Mehrkern-Prozessoransammlung aus dem Low-Power-Zustand der Ansammlung in einen Aktivzustand der Ansammlung steuern; und
Unterbrechungsereignisse von einem Puffer außerhalb der Mehrkern-Prozessoransammlung nach dem Verzögerungszeitraum abrufen und die Unterbrechungsereignisse bedienen und danach Tasks bedienen, die für die Mehrkern-Prozessoransammung eingeteilt sind, wobei die Unterbrechungsereignisse und die Tasks gemäß einer ursprünglichen Einteilung bedient werden, die neu von dem Verzögerungszeitraum in den aktiven Zeitraum eingeteilt wurde.

10. Speichermedium nach Anspruch 9, das ferner Anweisungen zum Bestimmen des Verzögerungszeitraums in einem Betriebssystem 'OS' und Übertragen eines Werts des Verzögerungszeitraums von dem OS zu der Mehrkern-Prozessoransammlung, um einen Timer der Mehrkern-Prozessoransammlung zu initialisieren, speichert.

11. Speichermedium nach Anspruch 9, wobei der Verzögerungszeitraum NOI x (100% Umax) entspricht, wobei NOI dem nächsten Operationsintervall entspricht und Umax der größte vorhergesagte Auslastungswert ist.

**Revendications**

1. Procédé, consistant à :

   recevoir des informations de prédiction correspondant à une valeur d'utilisation prédite pour chacun d'une pluralité de coeurs d'un boîtier processeur au cours d'un prochain intervalle d'opérations, le prochain intervalle d'opérations correspondant à un cycle d'utilisation pour le boîtier processeur ;
   définir une période de différé pour le boîtier processeur au cours du prochain intervalle d'opérations dans laquelle le boîtier processeur est appelé à occuper un état de faible consommation de boîtier, dans lequel la pluralité de coeurs sont inactifs, sur la base des informations de prédiction ; et
   amener le boîtier processeur à adopter l'état de faible consommation de boîtier pendant la période de différé puis amener le boîtier processeur à adopter un état actif de boîtier pendant une période active du prochain intervalle d'opérations, une longueur de la période active correspondant à une différence entre une longueur du prochain intervalle d'opérations et une longueur de la période de différé, la longueur de la période active correspondant à une durée suffisante pour exécuter des tâches et des événements de coupure ordonnancés sur un coeur parmi la pluralité de coeurs qui possède une valeur d'utilisation prédite maximale pendant le prochain intervalle d'opérations, la période de différé allant d'un début du prochain intervalle d'opérations à un début de la période active, notamment réordonnancer l'ensemble des événements de coupure et des tâches à exécuter sur la pluralité de coeurs depuis la période de différé sur la période active.

2. Procédé selon la revendication 1, consistant en outre à initialiser un temporisateur du boîtier processeur à la longueur de la période de différé et à déclencher la période active à l'expiration du temporisateur.

3. Procédé selon la revendication 2, consistant en outre à recevoir les informations de prédiction et à définir la période de différé dans un système d'exploitation 'OS' et à transmettre une valeur de la période de différé de l'OS au boîtier processeur afin d'initialiser le temporisateur.

4. Procédé selon la revendication 1, dans lequel la période de différé correspond à NOI x (100% - Umax), où NOI correspond au prochain intervalle d'opérations et Umax est la valeur d'utilisation prédite maximale.

5. Procédé selon la revendication 4, consistant en outre à :

   récupérer les événements de coupure dans un tampon externe au boîtier processeur après le début de la période active ; et
   assurer le traitement des événements de coupure puis assurer le traitement des tâches, le traitement des événements de coupure et des tâches étant assuré selon un ordonnancement initial différé de la période de différé.

6. Système, comprenant :

   un boîtier processeur comportant une pluralité de coeurs et au moins un temporisateur, le boîtier processeur étant appelé à rester dans un état de basse consommation de boîtier dans lequel la pluralité de coeurs sont inactifs pendant une première partie d'un intervalle d'opérations et dans un état actif de boîtier pendant une deuxième partie de l'intervalle d'opérations correspondant à un cycle d'utilisation, l'ensemble des événements de coupure et des tâches ordonnancés pour la pluralité de coeurs au cours de la première partie étant réordonnancés sur la deuxième partie ;

une mémoire couplée au boîtier processeur ;

un contrôleur couplé au boîtier processeur afin de recevoir des informations d'utilisation pour la pluralité de coeurs pendant un intervalle en cours ;

un prédicteur couplé au contrôleur afin de prédire un taux d'utilisation prédit pour chacun de la pluralité de coeurs pendant l'intervalle d'opérations sur la base des informations d'utilisation ; et

un ordonnanceur couplé au prédicteur afin de recevoir les taux d'utilisation et d'établir une longueur de la première partie de l'intervalle d'opérations sur la base d'au moins un des taux d'utilisation, le boîtier processeur étant appelé à adopter l'état actif de boîtier au cours de la deuxième partie de l'intervalle d'opérations, la deuxième partie correspondant à une durée suffisante pour exécuter des tâches et des événements de coupure ordonnancés sur un coeur parmi la pluralité de coeurs qui possède un taux d'utilisation prédit maximal pendant le prochain intervalle d'opérations.

7. Système selon la revendication 6, dans lequel la première période correspond à :

01 x (100% - Umax), où 01 correspond à l'intervalle d'opérations et Umax est le taux d'utilisation prédit maximal.

8. Système selon la revendication 6, dans lequel l'ordonnanceur est appelé à réordonnancer une temporisation initiale pour une pluralité de tâches depuis la première partie sur la deuxième partie, le boîtier processeur étant appelé à exécuter la pluralité de tâches dans la deuxième partie selon la temporisation initiale.

9. Support d'enregistrement sur lequel sont enregistrées des instructions dont l'exécution par un boîtier processeur multicoeur permet de :

recevoir des informations de prédiction correspondant à une valeur d'utilisation prédite pour chacun d'une pluralité de coeurs du boîtier processeur multicoeur au cours d'un prochain intervalle d'opérations;

établir, sur la base des informations de prédiction, une période de différé correspondant à une différence entre une longueur du prochain intervalle d'opérations, le prochain intervalle d'opérations correspondant à un cycle d'utilisation pour le boîtier processeur multicoeur, et une longueur d'une période inactive suffisante pour assurer le traitement d'opérations dans le prochain intervalle d'opérations ordonnancées sur un coeur du boîtier processeur multicoeur qui possède un taux d'utilisation prédit maximal pendant le prochain intervalle d'opérations;

commander l'adoption, par le boîtier processeur multicoeur, d'un état de faible consommation de boîtier dans lequel la pluralité de coeurs du boîtier processeur multicoeur sont inactifs à un début du prochain intervalle d'opérations, notamment le réordonnancement de l'ensemble des événements de coupure et des tâches à exécuter sur la pluralité de coeurs depuis la période de différé sur la période active, et la sortie, par le boîtier processeur multicoeur, de l'état de faible consommation de boîtier vers un état actif de boîtier à une fin de la période de différé ; et

récupérer des événements de coupure dans un tampon externe au boîtier processeur multicoeur après la période de différé et assurer le traitement des événements de coupure puis assurer le traitement des tâches ordonnancées sur le boîtier processeur multicoeur, le traitement des événements de coupure et des tâches étant assuré selon un ordonnancement initial réordonnancé depuis la période de différé sur la période active.

10. Support d'enregistrement selon la revendication 9, sur lequel sont en outre enregistrées des instructions permettant d'établir la période de différé dans un système d'exploitation 'OS' et de transmettre une valeur de la période de différé de l'OS au boîtier processeur multicoeur afin d'initialiser un temporisateur du boîtier processeur multicoeur.

11. Support d'enregistrement selon la revendication 9, dans lequel la période de différé correspond à NOI x (100% - Umax), où NOI correspond au prochain intervalle d'opérations et Umax est le taux d'utilisation prédit maximal.

<u>10</u>

FIG. 1

<u>100</u>

```
┌─────────────────┐
│ Receive Prediction │
│   Information      │ ─── 110
└─────────────────┘
         │
         ▼
┌─────────────────┐
│ Set Idle Period Based │
│   On Prediction       │ ─── 120
│   Information         │
└─────────────────┘
         │
         ▼
┌─────────────────┐
│ Control Processor   │
│ Package To Be In    │
│ Package Low Power   │ ─── 130
│ State For Idle Period │
└─────────────────┘
         │
         ▼
┌─────────────────┐
│ Control Processor   │
│ Package To Be In    │
│ Active Power State  │ ─── 140
│ For Active Period   │
└─────────────────┘
```

FIG. 2

<u>150</u>

```
        ┌─────────┐
        │  Start  │
        └─────────┘
             │
             ▼
┌─────────────────────────────────┐
│  Compute FWD Step And BACK Step  │
│      On First T Times Slices     │  ─── 160
└─────────────────────────────────┘
             │
  ┌──────────▼──────────────────────┐
  │ Cache The Previous Results of T FWD Steps │
  │           And T BACK Steps       │  ─── 170
  └─────────────────────────────────┘
             │
             ▼
┌─────────────────────────────────┐
│ For The New Time Slice T+1, Make One Step │
│                FWD               │  ─── 180
└─────────────────────────────────┘
             │
             ▼
┌─────────────────────────────────┐
│ For The New Time Slice T+1, Make One Step │
│               BACK               │  ─── 190
└─────────────────────────────────┘
             │
             ▼
        ┌─────────┐
        │   End   │
        └─────────┘
```

FIG. 3

300

Receive Predicted Core Utilization
Information (U_coreX) — 310

Set U_max=max(U_core0, ..., U_coreN)
T*=500*(100%-U_max) — 320

On Each Core:  Stop All Task Processing
And Break-Event Servicing — 330

On Each Package:  Register A
Watchdog Timer = T* — 340

Idle Cores — 350

. . . . . . . .

Package Watchdog Timer Expires — 360

On Each Core:  Fetch Buffered Break-Events — 370

Service Break-Events In Original Timing And Service
Delayed Tasks In Original Timing — 380

FIG. 4

FIG. 5

FIG. 6

EP 2 073 097 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004139356 A
- EP 1282030 A